# EUROPEAN PATENT APPLICATION

(11) **EP 4 425 467 A1**
(43) Date of publication of application: **04.09.2024**
(21) Application number: 24159634.5
(22) Date of filing: 26.02.2024
(51) Int. Cl.: G09B 7/02, G06F 3/048

(54) **INFORMATION PROCESSING APPARATUS, INFORMATION PROCESSING METHOD, AND COMPUTER PROGRAM**

(30) Priority: 28.02.2023 JP 2023029940
(71) Applicant: Casio Computer Co., Ltd., Tokyo 151-8543 (JP)
(72) Inventor: Saito, Takuya, Hamura-shi, Tokyo, 205-8555 (JP)
(74) Representative: Grünecker Patent- und Rechtsanwälte PartG mbB

(57) **Abstract**

An information processing apparatus includes a control unit configured to: display an answer field including an answer group on a display unit, the answer group including at least: answers input by a user to each of a plurality of questions; and a display object to which a property of correction is set in association with each of the answers; and in response to detecting an operation instructing scoring of individual answers in the answer group from an operation unit, restrict editing of the individual answers included in the answer group by changing the property of the display object.

## Description

### TECHNICAL FIELD

The disclosure of the present specification relates to an information processing apparatus, an information processing method, and a computer program.

### BACKGROUND

In recent years, the introduction of ICT (an abbreviation for Information and Communication Technology) devices into school education is progressing. Along with this, since chances to obtain, as electronic information, answers to questions, significantly increase, it is expected that automatic scoring technology using a computer will be promoted and burdens on teachers will be reduced.

Such a technology is described, for example, in JP2004-264874A. According to the technology described in this publication, the answerer can proceed with self-directed learning by selecting a scoring, a hint, a commentary, and the like for each question.

### SUMMARY

In the case of a multiple-choice question that can be self-scored, if a student partially corrects an answer to the same multiple-choice question after submitting an answer result to a teacher, it is difficult for the teacher to determine the student's understanding of the multiple-choice question.

The present disclosure has been made in view of the above situations, and one aspect of the present disclosure provides a user interface that can promote effective use of a scoring result of multiple-choice questions and the like.

An information processing apparatus according to one illustrative aspect of the present disclosure includes a control unit configured to: display an answer field including an answer group on a display unit, the answer group including at least: answers input by a user to each of a plurality of questions; and a display object to which a property of correction is set in association with each of the answers; and in response to detecting an operation instructing scoring of individual answers in the answer group from an operation unit, restrict editing of the individual answers included in the answer group by changing the property of the display object.

According to the above illustrative aspect, a user interface that can promote effective use of a scoring result of multiple-choice questions and the like is provided.

### BRIEF DESCRIPTION OF THE SEVERAL VIEWS OF THE DRAWING

FIG. 1 is a view showing an overall configuration of an information processing system according to an illustrative embodiment of the present disclosure.
FIG. 2 is a block diagram showing a configuration of an electronic circuit of an information processing server according to the illustrative embodiment of the present disclosure.
FIG. 3 is a view showing a content of a sticky note management table stored in a sticky note management table data storage area of the information processing server according to the illustrative embodiment of the present disclosure.
FIG. 4 is a block diagram showing a configuration of an electronic circuit of a user terminal according to the illustrative embodiment of the present disclosure.
FIG. 5 is a flow chart showing electronic sticky note creation processing that is executed in the information processing server according to the illustrative embodiment of the present disclosure.
FIG. 6 is a view showing an example of a screen that is displayed on a display unit of the user terminal when the electronic sticky note creation processing shown in FIG. 5 is executed.
FIG. 7 is a view showing an example of a screen that is displayed on the display unit of the user terminal when the electronic sticky note creation processing shown in FIG. 5 is executed.
FIG. 8 is a view showing an example of a screen that is displayed on the display unit of the user terminal when the electronic sticky note creation processing shown in FIG. 5 is executed.
FIG. 9 is a flow chart showing mock test processing that is executed in the information processing server according to the illustrative embodiment of the present disclosure.
FIG. 10 is a flow chart showing mark sheet screen processing that is executed in the information processing server according to the illustrative embodiment of the present disclosure.
FIG. 11 is a view showing an example of a screen that is displayed on the display unit of the user terminal when mock test processing that is executed in the information processing server according to the illustrative embodiment of the present disclosure is executed.
FIG. 12 is a view showing an example of a screen that is displayed on the display unit of the user terminal when the mock test processing that is executed in the information processing server according to the illustrative embodiment of the present disclosure is executed.
FIG. 13 is a view showing an example of a screen that is displayed on the display unit of the user terminal when the mock test processing that is executed in the information processing server according to the illustrative embodiment of the present disclosure is executed.
FIG. 14 is a view showing an example of a screen that is displayed on the display unit of the user terminal when the mock test processing that is executed in the information processing server according to the illustrative embodiment of the present disclosure is executed.
FIG. 15 is a view showing an example of a screen that is displayed on the display unit of the user terminal when the mock test processing that is executed in the information processing server according to the illustrative embodiment of the present disclosure is executed.
FIG. 16 is a view showing an example of a screen that is displayed on the display unit of the user terminal when the mock test processing that is executed in the information processing server according to the illustrative embodiment of the present disclosure is executed.
FIG. 17 is a view showing an example of a screen that is displayed on the display unit of the user terminal when the mock test processing that is executed in the information processing server according to the illustrative embodiment of the present disclosure is executed.
FIG. 18 is a view showing an example of a screen that is displayed on the display unit of the user terminal when the mock test processing that is executed in the information processing server according to the illustrative embodiment of the present disclosure is executed.
FIG. 19 is a view showing another example of a screen that is displayed on the display unit of the user terminal and can allow for an instruction for the start of execution of the mock test processing.
FIG. 20 is a view showing an example of a screen that is displayed on the display unit of the user terminal when the mock test processing that is executed in the information processing server according to the illustrative embodiment of the present disclosure is executed.
FIG. 21 is a view showing an example of a screen that is displayed on the display unit of the user terminal when the mock test processing that is executed in the information processing server according to the illustrative embodiment of the present disclosure is executed.
FIG. 22 is a view showing an example of a screen that is displayed on the display unit of the user terminal when the mock test processing that is executed in the information processing server according to the illustrative embodiment of the present disclosure is executed.
FIG. 23 is a view showing an example of a screen that is displayed on the display unit of the user terminal when the mock test processing that is executed in the information processing server according to the illustrative embodiment of the present disclosure is executed.
FIG. 24 is a view showing an example of the screen that is displayed on the display unit of the user terminal when the mock test processing that is executed in the information processing server according to the illustrative embodiment of the present disclosure is executed.
FIG. 25 is a view showing an example of a screen that is displayed on the display unit of the user terminal when the mock test processing that is executed in the information processing server according to the illustrative embodiment of the present disclosure is executed.
FIG. 26 is a view showing an example of a screen that is displayed on the display unit of the user terminal when the mock test processing that is executed in the information processing server according to the illustrative embodiment of the present disclosure is executed.

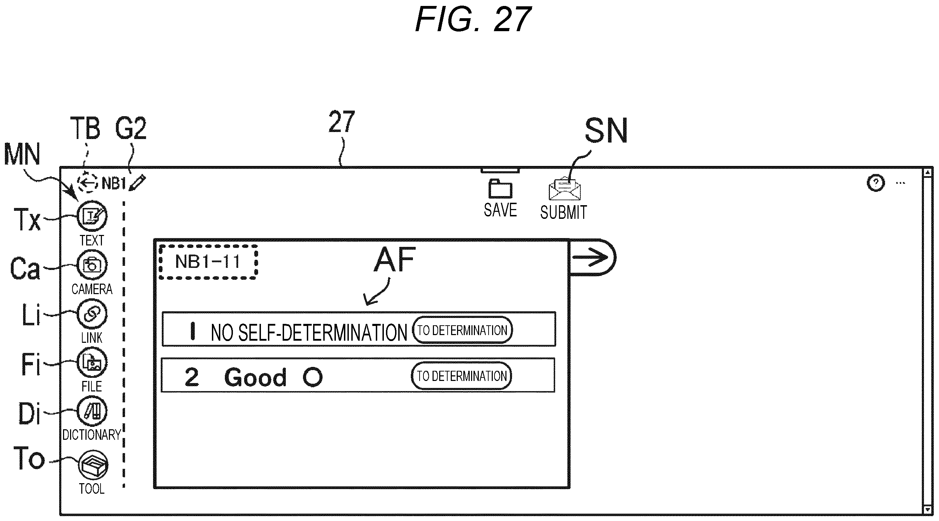

FIG. 27 is a view showing an example of a screen that is displayed on the display unit of the user terminal when the mock test processing that is executed in the information processing server according to the illustrative embodiment of the present disclosure is executed.

### DETAILED DESCRIPTION

Hereinafter, an illustrative embodiment of the of the present disclosure will be described in detail with reference to the drawings.

### Configuration of Illustrative Embodiment of Present Disclosure

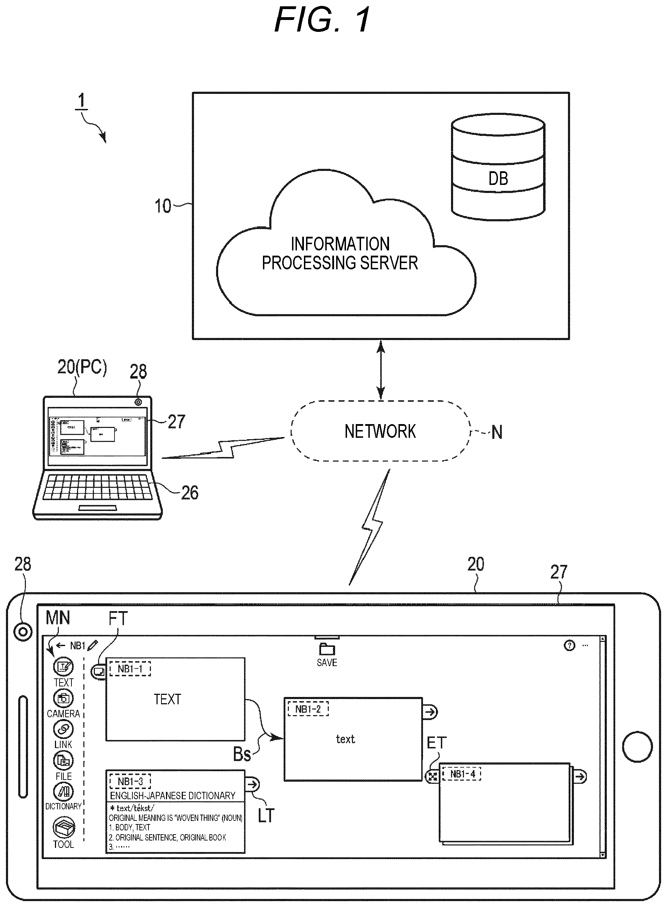

FIG. 1 is a view showing an overall configuration of an information processing system 1 according to an illustrative embodiment of the present disclosure.

The information processing system 1 includes an information processing server 10 (server apparatus) provided on a network N such as the Internet, and a user terminal 20 (communication device) communicatively connected to the information processing server 10.

The information processing server 10 is a dedicated server that connects an information processing server-using application for using the information processing server 10 and a cloud service.

Note that both the information processing server 10 and the user terminal 20 can be information processing apparatuses according to the present disclosure. In the below, a case will be described in which the information processing server 10 performs a variety of processing, including creation and management of electronic sticky notes, practice and management of mock tests, and the like, in response to user operations on an application (Web browser, dedicated application, and the like) of the user terminal 20. In another illustrative embodiment, the variety of processing, including creation and management of electronic sticky notes, practice and management of mock tests, and the like, may be performed on the user terminal 20.

The user terminal 20 is, for example, a tablet terminal with a communication function, a smart phone, a PC, an electronic dictionary, a mobile phone, an e-book, a portable game console, or the like.

Although FIG. 1 shows two user terminals 20 communicatively connected to the information processing server 10, more user terminals 20 may be communicatively connected to the information processing server 10.

An information processing server-using application (information processing server-using app) is installed in the user terminal 20.

### {Functions of Information Processing Server 10}

The information processing server 10 has at least the following functions (10a) to (10g) in a state in which it is communicatively connected to the user terminal 20 in accordance with the information processing server-using application of the user terminal 20.

### { [Function (10a)]}

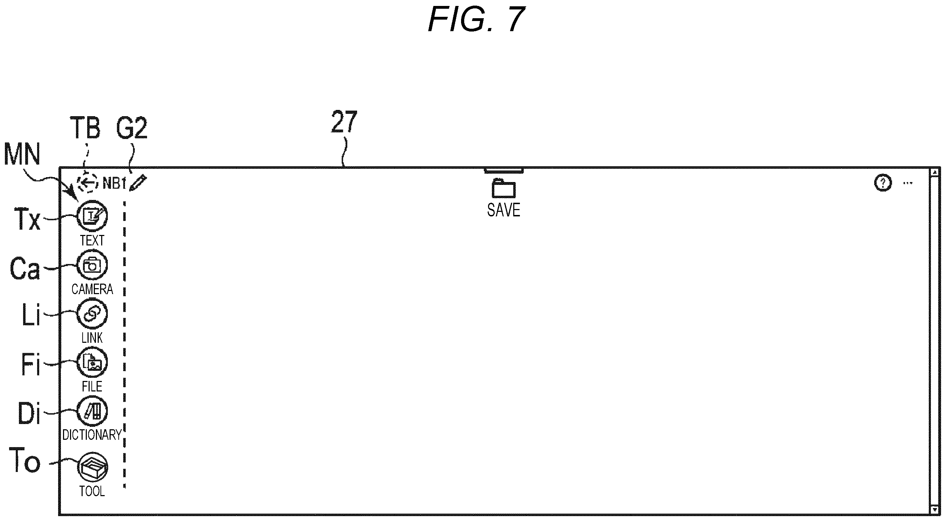

A function of creating a notebook screen G2 in response to an operation on the user terminal 20 and causing the created notebook screen G2 to be displayed on a display unit 27 of the user terminal 20 (for example, refer to FIG. 7). The notebook screen G2 is a display area (notebook NBm) where a user can input arbitrary information and have the information displayed. Note that the symbol m represents a natural number.

### {[Function (10b)]}

A function of, in response to a user operation on a notebook menu MN provided on the notebook screen G2, creating an electronic sticky note NBm-n in which a type of information selected from the notebook menu MN has been input, and causing the created electronic sticky note NBm-n to be displayed at any user-desired location in the notebook NB1. Note that the symbol n represents a natural number.

### {[Function (10c)]}

A function of moving a [Line Connection] tab LT added to the right end of the electronic sticky note NBm-n (in FIG. 1, electronic sticky note NB1-3) to another electronic sticky note (in FIG. 1, electronic sticky note NB1-2) in the notebook NBm (in FIG. 1, notebook NB1) in response to a user operation, and connecting (line-connecting) and organizing the electronic sticky note NB1-1 and the electronic sticky note NB1-2 in sequence in a row by a connection arrow Bs of a predetermined color (for example, blue).

### { [Function (10d)]}

A function of, in response to a user operation on a [Folding] tab FT added to the left end of the forefront electronic sticky note NB 1-1 among a plurality of electronic stick notes (in FIG. 1, electronic stick notes NB 1-1 and NB1-2) connected (line-connected) and organized in sequence in a row, switching a display from an expanded state so that the forefront electronic sticky note (in FIG. 1, electronic sticky note NB 1-1) is folded up and the second and subsequent electronic sticky notes (in FIG. 1, electronic sticky note NB 1-2) are folded down to fit within a predetermined range.

### { [Function (10e)]}

A function of, in response to a user operation on an [Expansion] tab ET (for example, refer to FIG. 1) added to the left end of the forefront electronic sticky note (for example, electronic sticky note NB 1 -4) among a plurality of electronic sticky notes (for example, electronic sticky notes NB1-4 and NB1-5 (not shown)) displayed with being folded, expanding and displaying the plurality of electronic sticky notes (for example, electronic sticky notes NB1-4 and NB1-5 (not shown)) to their original form.

### {[Function (10f)]}

A function of, in response to a display mode selected by a user operation, switching and displaying a plurality of electronic sticky notes (for example, electronic sticky notes NB1-1 to NB1-n) connected (line-connected) in sequence in a row in a state of being enlarged in sequence from the forefront electronic sticky note (for example, electronic sticky note NB1-1) to the last electronic sticky note (for example, electronic sticky note NB1-n), like a slide show.

### {[Function (10g)]}

A function of causing a mock test content to be displayed on the display unit 27 of the user terminal 20 in response to an operation on the user terminal 20, and creating and recording test result information in which answers input by a user and a scoring result are associated with each other.

Note that, in the present illustrative embodiment, the connection of electronic sticky notes is mainly connection of a plurality of electronic sticky notes NBm-n in sequence in a row.

In addition, in the present illustrative embodiment, the expression "organizing" a plurality of electronic sticky notes NBm-n may be used, including putting a plurality of electronic sticky notes NBm-n into a classified, grouped, and identifiable state and putting the sequence thereof into an identifiable state.

In addition, in the present illustrative embodiment, the symbol NBm (NB 1, NB2, and the like) represents a notebook ID (identification information). The symbol NBm may be read interchangeably as a notebook name input by a user. Furthermore, the symbol NBm-n (NB1-1, NB 1-2, and the like) represents an electronic sticky note ID created in the notebook NBm. The symbol NBm-n may be read interchangeably as an electronic sticky note name input by a user.

Specifically, the notebook name may be, for example, a subject name of a subject that a user is studying, and the electronic sticky note name may be, for example, a unit name within the subject or a study date and time.

### {Electronic Circuit of Information Processing Server 10 }

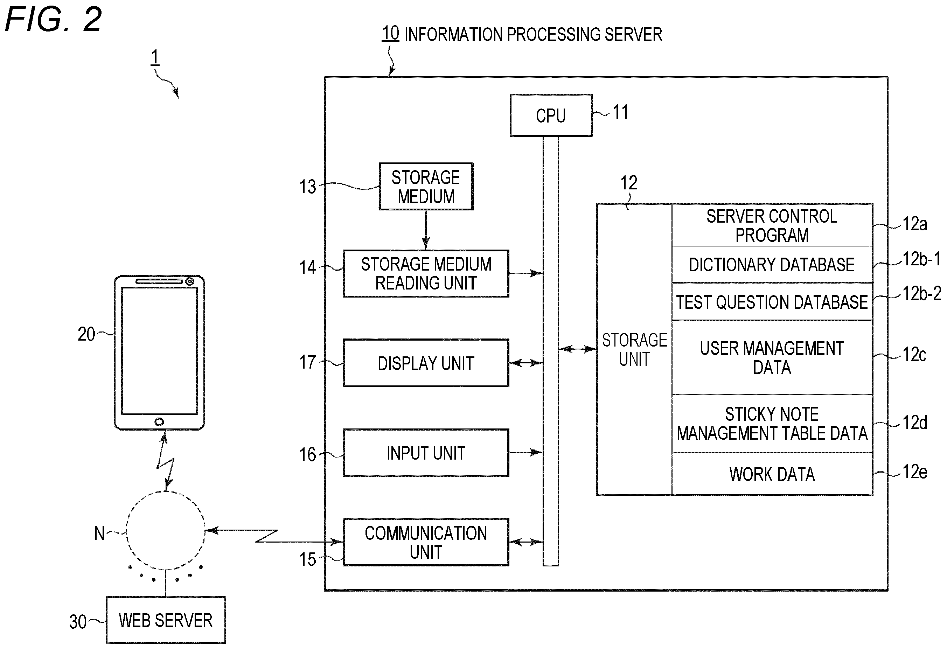

FIG. 2 is a block diagram showing a configuration of an electronic circuit of the information processing server 10.

The electronic circuit of the information processing server 10 includes a control unit (CPU: Central Processing Unit) 11, which is a computer, a storage unit 12, a storage medium reading unit 14, a communication unit 15, an input unit 16, and a display unit 17.

The control unit 11 controls an operation of each circuit unit in accordance with a server control program 12a stored in the storage unit 12, in response to an input signal corresponding to a user operation on the input unit 16 or a signal received by the communication unit 15 from the user terminal 20 on the network N.

The server control program 12a may be stored in advance in the storage unit 12, may be read and stored in the storage unit 12 from an external storage medium 13 such as a CD-ROM via the storage medium reading unit 14, or may be downloaded from a Web server (in this case, program server) 30 on the network N and read and stored in the storage unit 12.

The server control program 12a includes at least a program for executing the above functions (10a) to (10g).

In the storage unit 12, in addition to a storage area for the server control program 12a, a dictionary database storage area 12b, a user management data storage area 12c, a sticky note management table data storage area 12d, and a work data storage area 12e are secured.

In a dictionary database storage area 12b-1, various dictionary data such as an English-Japanese dictionary, a German-Japanese dictionary, a French-Japanese dictionary, and a Japanese dictionary is stored as dictionary data in which words that are headwords are associated with explanatory information such as translations, word meanings, example sentences, and commentaries corresponding to the headwords.

In a test question database storage area 12b-2, mock test data such as questions, answers, commentaries, and the like is recorded. For example, in the case of English mock test data, questions include multiple-choice questions, speaking questions, English writing questions, and the like.

In the user management data storage area 12c, for each user (user ID (account)) of the user terminal 20 in which the information processing server-using application is installed, a password registered by the user, a user attribute (occupation (school), grade, and the like), and data (notebook data) of a content of the notebook NBm are stored in association with one another. The notebook data is data including a content of the electronic sticky note NBm-n created in response to a user operation, and is associated with the notebook ID and the electronic sticky note ID.

In the user management data storage area 12c, additionally, for each user (user ID (account)) of the user terminal 20, an ID of available dictionary data (dictionary content), an ID of available mock test data (mock test content), and data of a scored test result are stored.

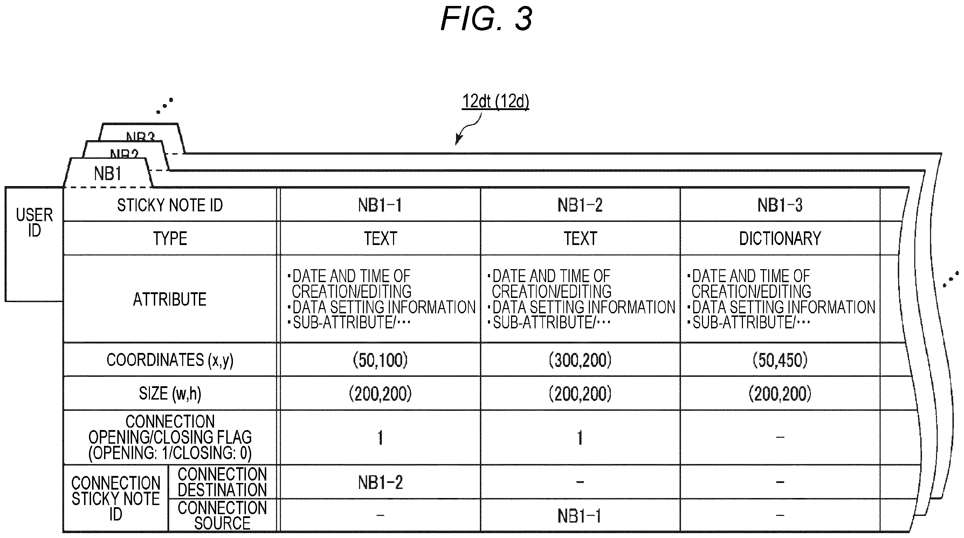

FIG. 3 is a view showing a content of a sticky note management table (notebook management table) 12dt stored in the sticky note management table data storage area 12d of the information processing server 10.

In the sticky note management table (notebook management table) 12dt, for each user ID stored (registered) in the user management data storage area 12c, an electronic sticky note ID of the electronic sticky note NBm-n included in the notebook NBm, a type of information selected from the notebook menu MN, an attribute of data included in the electronic sticky note NBm-n (date and time of creation/editing, data setting information such as data format, sub-attribute, and the like), coordinates indicating a display position of the electronic sticky note NBm-n on the notebook NBm, a display size of the electronic sticky note NBm-n, a connection opening /closing flag, and a connection sticky note ID are stored in association with the notebook ID of the notebook NBm. The connection opening/closing flag indicates whether to expand and display or to fold and display an electronic sticky note line-connected to another electronic sticky note. The connection sticky note ID indicates electronic sticky note IDs of a connection destination and a connection source.

Note that since the connection of electronic sticky notes in the present illustrative embodiment is mainly connection of a plurality of electronic sticky notes NB1-n in sequence in a row, the electronic sticky note ID of each of a connection destination and a connection source, stored in the connection sticky note ID, is limited to one at maximum. As a result, when another electronic sticky note ID is already stored in the connection destination/connection source of the connection sticky note ID, new connection to the corresponding electronic sticky note is prohibited, making it possible to prevent a connection state of the electronic sticky note from branching into multiple rows.

The sticky note management table (notebook management table) 12dt collectively stores management information of the plurality of electronic sticky notes (NB1-n/NB2-n/NBm-n) included in each of the plurality of notebooks (NB1, NB2, ...), and is also a management table for the notebook NBm that allows the stored management information to be updated as the notebook NBm and the electronic sticky note NBm-n contained in the notebook NBm are created and information is updated.

In the work data storage area 12e, various data that is generated or obtained in response to control of an operation of each unit by the control unit 11 is temporarily stored as needed.

In the information processing server 10 configured as described above, the control unit 11 controls the operation of each circuit unit in accordance with commands described in the server control program 12a, and the software and the hardware operate in cooperation, thereby implementing various functions as described in the operation description described below.

### {Electronic Circuit of User Terminal 20 }

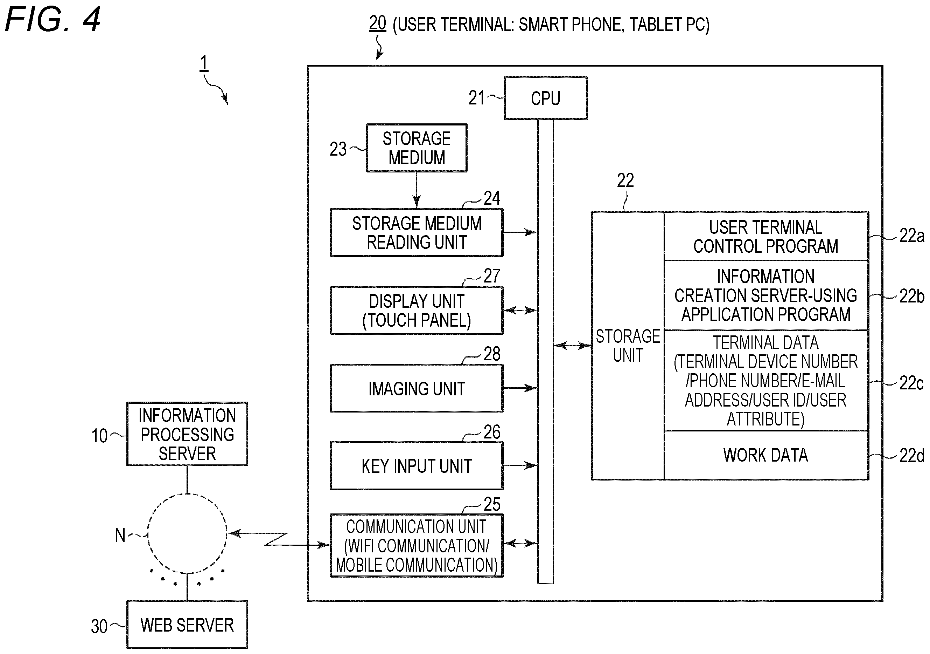

FIG. 4 is a block diagram showing a configuration of an electronic circuit of the user terminal 20.

The electronic circuit of the user terminal 20 includes a control unit (CPU) 21, which is a computer, a storage unit 22, a storage medium reading unit 24, a communication unit (Wi-Fi (registered trademark) communication/mobile communication) 25, a key input unit 26, a touch panel-type display unit 27, and an imaging unit (camera) 28.

The control unit 21 controls the operation of each circuit unit in accordance with a user terminal control program 22a and an information processing server-using application (information processing server-using app) 22b stored in the storage unit 22. The user terminal control program 22a may be stored in advance in the storage unit 22, may be read and stored in the storage unit 22 from an external storage medium 23 such as a memory card by the storage medium reading unit 24, or may be downloaded from the Web server (here, program server) 30 on the network N via the communication unit 25 and stored in the storage unit 22.

The information processing server-using application 22b is downloaded from the Web server (for example, a program server of an application store) 30 on the network N via the communication unit 25 and stored in the storage unit 22.

The user terminal control program 22a includes, in addition to a system program that controls the entire user terminal 20, a program for cooperating with various application programs stored in the storage unit 22 to communicatively connect frequently to external communication devices including the information processing server 10 and the Web server 30 on the network N.

The information processing server-using application 22b includes a program for communicatively connecting to the information processing server 10 to execute data input/output processing corresponding to the above functions (10a) to (10g).

The control unit 21 is connected to the key input unit 26 including a power key and a volume adjusting key, the touch panel-type display unit 27, the imaging unit (camera) 28, and the like, via a system and a data bus, in addition to the storage unit 22, the storage medium reading unit 24, and the communication unit 25.

In the storage unit 22, in addition to a program storage area for storing the user terminal control program 22a and the information processing server-using application 22b, a terminal data storage area 22c, a work data storage area 22d, and the like are secured.

In the terminal data storage area 22c, in addition to a terminal device number for communicatively connecting to external communication devices including the information processing server 10 and the Web server 30 on the network N, data such as a telephone number, an e-mail address, a user ID (account), and a user attribute (occupation (school)/grade) is stored as terminal data unique to the user terminal 20.

In the work data storage area 22d, various data that is generated or obtained in response to the control of an operation of each unit by the control unit 21 is temporarily stored as needed.

In the user terminal 20 configured as described above, the control unit 21 controls the operation of each circuit unit in accordance with commands described in the user terminal control program 22a and the information processing server-using application 22b, and the software and the hardware operate in cooperation, thereby implementing various functions as described in the operation description described below.

### Basic Electronic Sticky Note Processing

The basic electronic sticky note processing that is executed in the information processing system 1 will be described.

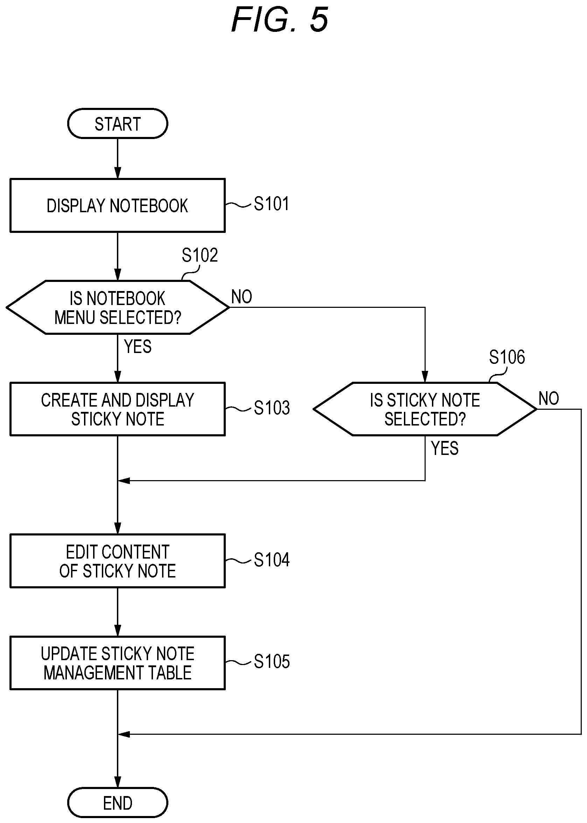

FIG. 5 is a flow chart showing electronic sticky note creation processing in accordance with the server control program 12a of the information processing server 10.

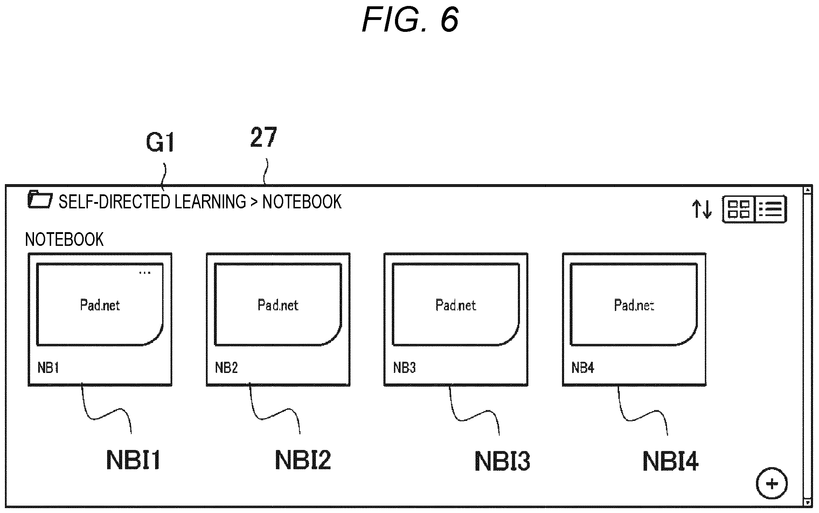

FIGS. 6 to 8 are views showing examples of screens that are displayed on the display unit 27 of the user terminal 20 when the electronic sticky note creation processing shown in FIG. 5 is executed.

FIG. 6 shows an example of a notebook list screen G1 that is displayed on the display unit 27 of the user terminal 20.

The information processing server 10 communicatively connects to the user terminal 20, in response to a login request from the user terminal 20. In this state, the control unit 11 causes the notebook list screen G1 to be displayed on the display unit 27 of the user terminal 20, for example, as shown in FIG. 6.

In the notebook list screen G1 of FIG. 6, the notebooks NBm (for example, notebooks NB1 to NB4) created in response to user operations are displayed in a list in the form of notebook icons NBI1 to NBI4.

FIG. 7 shows an example of a notebook screen G2 that is displayed on the display unit 27 of the user terminal 20.

In the notebook list screen G1, it is assumed that the user designates a notebook icon (for example, notebook icon NBI1) by a touch operation. In this case, the control unit 11 reads the notebook data of the notebook NB 1 designated by the user from the user management data storage area 12c, and based on the information stored in the sticky note management table data storage area 12d, causes the notebook data to be displayed on the display unit 27 as the notebook screen G2 of the notebook NB1 (step S101), as shown in FIG. 7.

In the example of FIG. 7, since even a single electronic sticky note NB1-n has not been created in the notebook NB1, a space displaying the electronic sticky note NB1-n is blank.

When the user touch-operates a [←] (close) button TB on the notebook screen G2, the control unit 11 switches the screen of the display unit 27 of the user terminal 20 from the notebook screen G2 to the notebook list screen G1.

Note that, in the present illustrative embodiment, the touch operation on the display screen may be a combination with a click operation by a mouse cursor or a designation operation and a decision operation by another pointer device.

A case will be described in which the user wants to attach and create the electronic sticky note NB1-n, in which arbitrary information has been input, to the notebook NB1.

As shown in FIG. 7, a notebook menu MN is provided at the left end of the notebook screen G2. When the user selects a button (Tx/Ca/Li/Fi/Di/To) representing an arbitrary type of information from the notebook menu MN (step S102: YES), the control unit 11 creates an electronic sticky note NB 1-n corresponding to the selected type of information and causes the created electronic sticky note to be displayed in the notebook NB 1 (step S103).

The notebook menu MN includes, for example, a [Text] button Tx, a [Camera] button Ca, a [Link] button Li, a [File] button Fi, a [Dictionary] button Di, and a [Tool] button To.

When the [Text] button Tx is selected, the control unit 11 causes a new electronic sticky note NB1-n to be displayed in the notebook NB 1 and starts a text input application of the user terminal 20 to put the same into a state in which an arbitrary text corresponding to a user operation can be input, displayed, and edited on the electronic sticky note NB1-n (step S104).

When the [Camera] button Ca is selected, the control unit 11 causes a new electronic sticky note NB1-n to be displayed in the notebook NB1 and starts the imaging unit 28 of the user terminal 20 to put the same into a state in which an arbitrary photograph image captured by the imaging unit 28 can be input, displayed, and edited on the electronic sticky note NB1-n (step S104).

When the [Link] button Li is selected, the control unit 11 causes a new electronic sticky note NB1-n to be displayed in the notebook NB 1 and starts the Web browser of the user terminal 20 to put the same into a state in which a user-desired Web page can be input, displayed, and edited on the electronic sticky note NB1-n (step S104).

When the [File] button Fi is selected, the control unit 11 causes a new electronic sticky note NB1-n to be displayed in the notebook NB1 and starts a file operational application of the user terminal 20 to put the same into a state in which a user-desired file can be input, displayed, and edited on the electronic sticky note NB1-n (step S104).

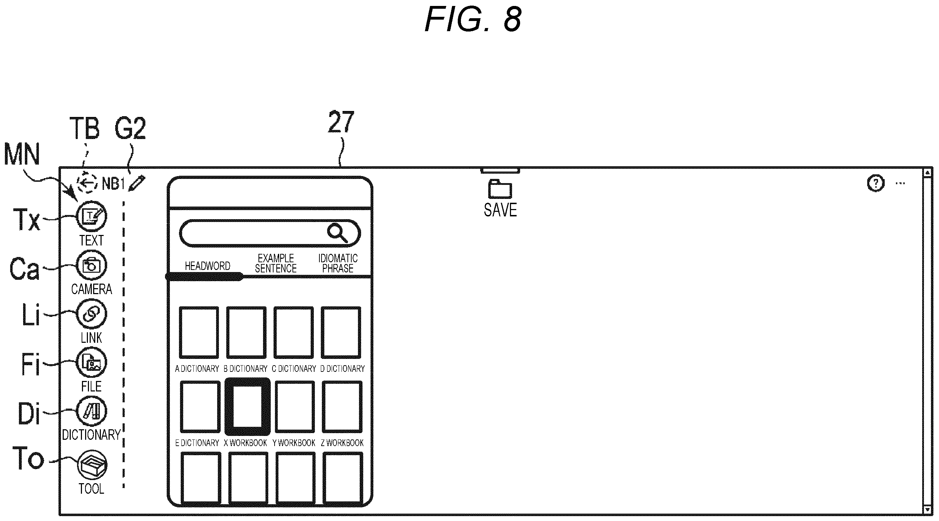

When the [Dictionary] button Di is selected, the control unit 11 causes an electronic sticky note NB1-n including a plurality of contents as selection options to be displayed in the notebook NB 1, as shown in FIG. 8. In addition, when a dictionary content is selected, the control unit 11 starts a dictionary application of the information processing server 10 to put the same into a state in which a headword and commentary information thereof of a user-desired dictionary can be searched from the dictionary database storage area 12b-1 and displayed and edited on the electronic dictionary NB1-n (step S104).

Note that when a mock test content is selected, the control unit starts a mock test application of the information processing server 10, reads necessary information from the test question database storage area 12b-2, and executes mock test processing. The mock test processing will be described in detail below.

When the [Tool] button To is selected, the control unit 11 causes a new electronic sticky note NB 1-n including a plurality of other tools as selection options to be displayed in the notebook NB1, and when the user selects a specific tool from the selection options, the control unit causes a content corresponding to the tool to be displayed in the sticky note (step S104).

Note that the notebook menu MN may include buttons for inputting other types of information, instead of or in addition to the [Text] button Tx, the [Camera] button Ca, the [Link] button Li, the [File] button Fi, the [Dictionary] button Di, and the [Tool] button To.

The control unit 11 moves the display position of the electronic sticky note NB 1 -n displayed in the notebook NB 1, in response to a user's touch operation and dragging (moving).

The control unit 11 may change a color of the electronic sticky note NB 1-n created in the notebook NB 1 to an arbitrary color, in response to a user operation.

The control unit 11 stores the type, attribute, coordinates, size, connection opening/closing flag, and connection sticky note ID in the sticky note management table data storage area 12d in association with the electronic sticky note ID of the electronic sticky note NB 1-n created in the notebook NB1 (step S105).

### Mock Test Processing

The mock test processing that is executed in the information processing system 1 will be described.

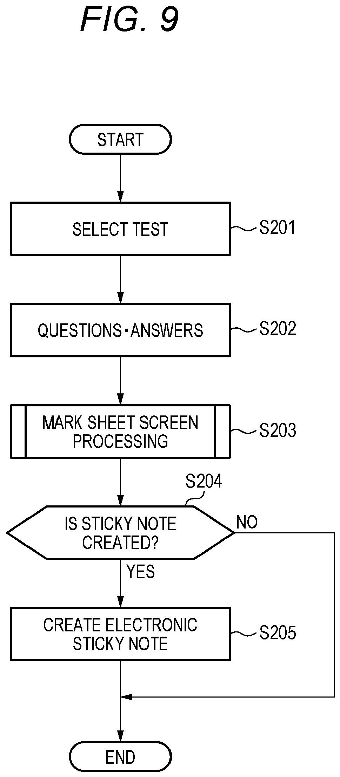

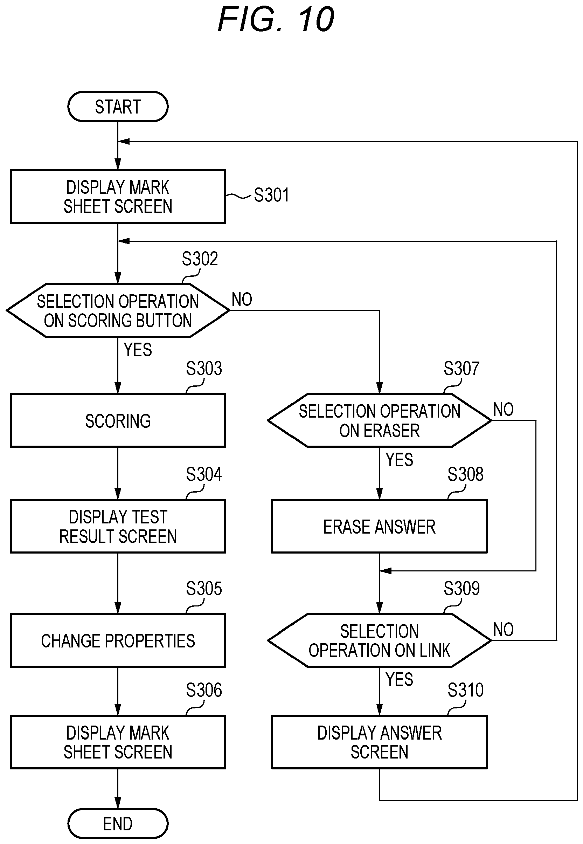

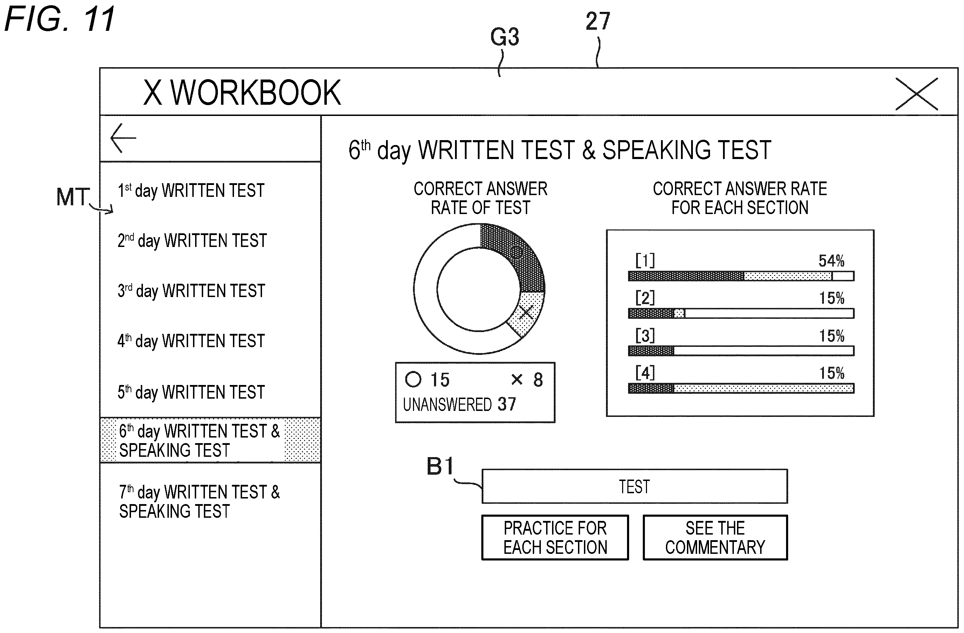

FIG. 9 is a flow chart showing mock test processing in accordance with the server control program 12a of the information processing server 10. FIG. 10 is a flow chart showing mark sheet screen processing in accordance with the server control program 12a of the information processing server 10. FIGS. 11 to 18 are views showing examples of screens that are displayed on the display unit 27 of the user terminal 20 when the mock test processing that is executed in the information processing server 10 is executed.

FIG. 11 is a mock test top screen G3 displayed on the display unit 27 of the user terminal 20, and is displayed when a mock test content is selected in the electronic sticky note and the mock test processing is started. Note that, in the mock test processing, each screen is displayed in full screen on the display unit 27.

First, the control unit 11 selects a test in response to a user's operation (step S201). In the left area of the mock test top screen G3, a menu MT for selecting a test is displayed. In the example of FIG. 11, "6th Day Written Test & Speaking Test" is selected, and the control unit 11 selects a test by detecting a user's operation on the menu MT.

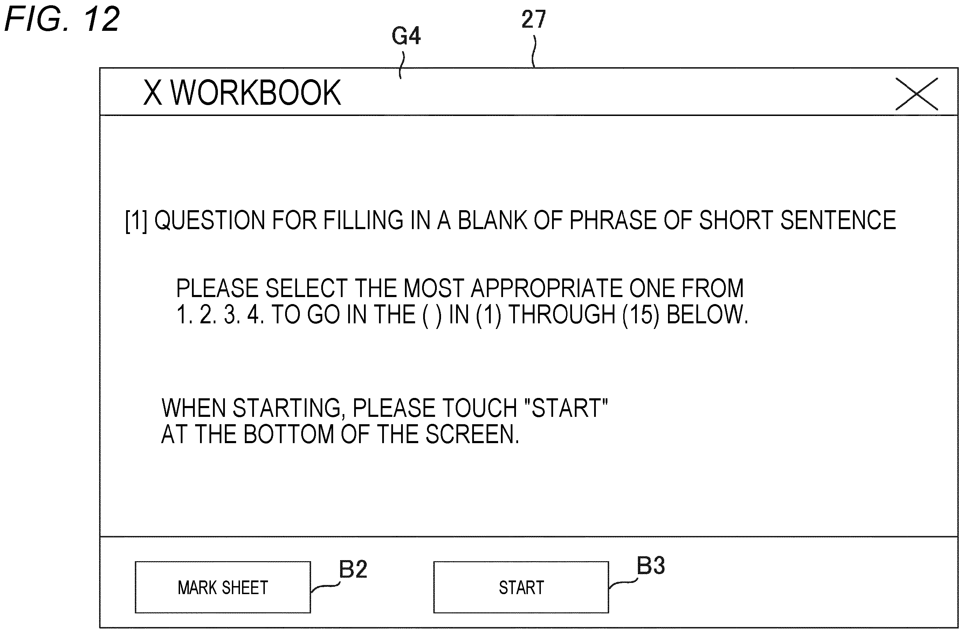

In the right area of the mock test top screen G3, a previous test result for the "6th Day Written Test & Speaking Test" selected by the user is displayed. When a button B1 in the mock test top screen G3 is touch-operated, the control unit 11 switches the screen of the display unit 27 of the user terminal 20 from the mock test top screen G3 to a question description screen G4 shown in FIG. 12, and performs question/answer processing (step S202).

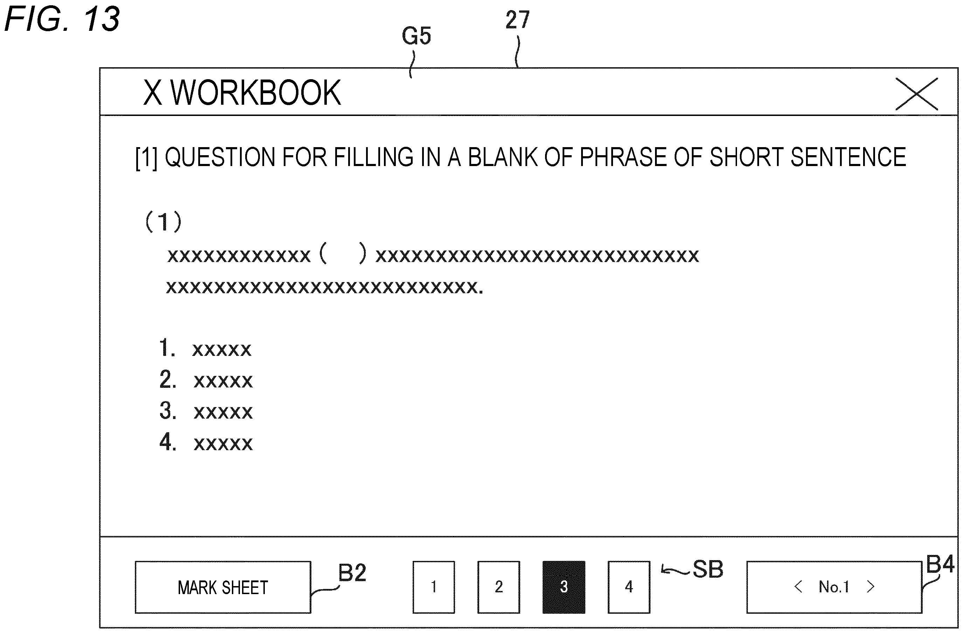

In the question/answer processing, first, a description of the test question is displayed on the question description screen G4 shown in FIG. 12. When a user's operation on a start button (button B3) at the bottom of the question description screen G4 is detected, the control unit 11 switches the screen of the display unit 27 of the user terminal 20 from the question description screen G4 to an answer screen G5 shown in FIG. 13.

FIG. 13 is an answer screen for a first question in multiple-choice questions. The control unit 11 detects a user's operation on an answer selection field SB displayed below a question sentence, and stores the selected answer in the storage unit 12 (work data storage area 12e) in association with the question. Note that FIG. 13 shows an aspect in which "3" is selected as the answer.

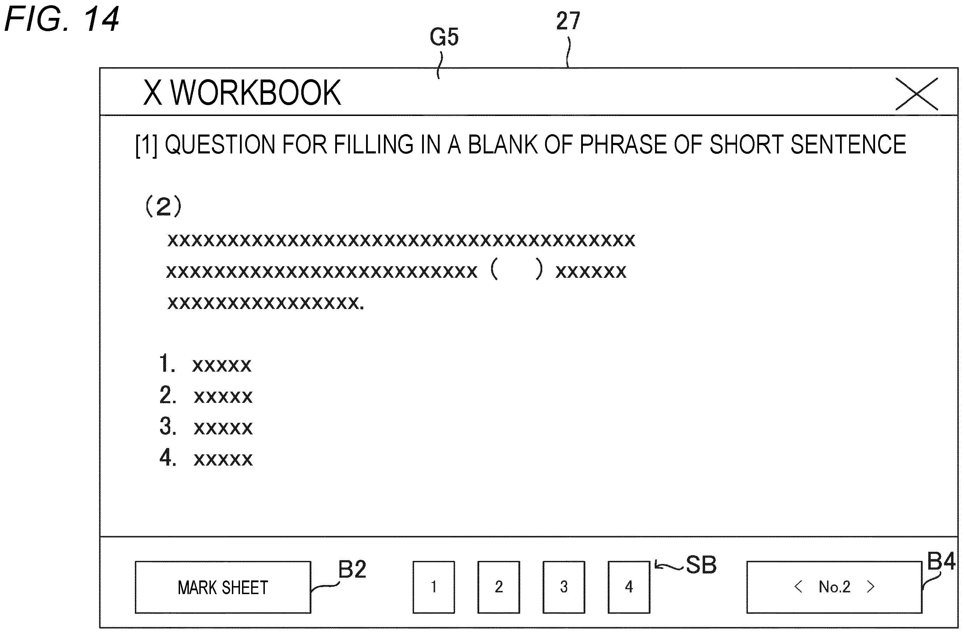

Thereafter, when a user's operation on a button B4 at the bottom of the answer screen G5, the control unit 11 switches the screen of the display unit 27 of the user terminal 20 from the answer screen G5 shown in FIG. 13 to the answer screen G5 for a next question shown in FIG. 14.

When the user repeatedly answers to the respective problems and selects the button B4 on the answer screen G5 for a final question, the control unit 11 detects the user's operation and performs the mark sheet screen processing shown in FIG. 10 (step S203).

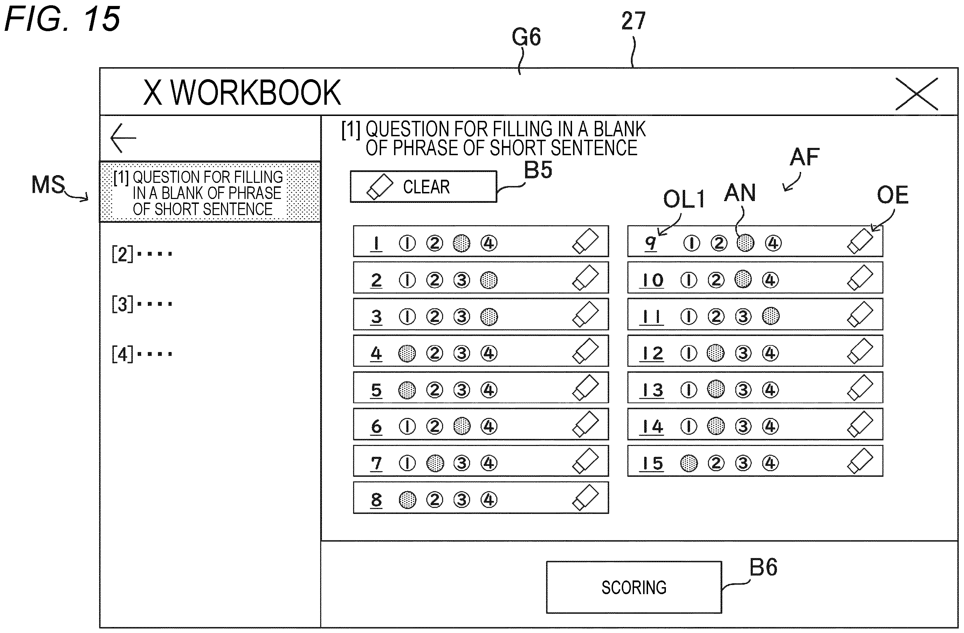

In the mark sheet screen processing, the control unit 11 first switches the screen of the display unit 27 of the user terminal 20 to a mark sheet screen G6 shown in FIG. 15 and causes the mark sheet screen G6 to be displayed (step S301). In step S301, the control unit 11 performs processing of displaying an answer field AF including an answer group consisting of answers AN to each of a plurality of questions.

In the left area of the mark sheet screen G6, a menu MS for selecting a section of the mock test is displayed. In the example of FIG. 15, a first section "[1] Question for filling in a blank of phrase of short sentence" is selected, and in the right area of the mark sheet screen G6, the answer field AF to the selected section "[1] Question for filling in a blank of phrase of short sentence" is displayed. The control unit 11 detects a user's operation on the menu MS and switches the answer field AF displayed in the right area of the mark sheet screen G6 to one corresponding to the selected section.

The answer field AF is an answer field in a mark sheet format with options prepared for each question and is composed of a clear button (button B5) and a scoring button (button B6), as well as an area corresponding to each question.

The area corresponding to each question includes four options from "1" to "4", as well as a link OL1 linked to the answer screen G5 of the corresponding question and an eraser OE. For a question for which an answer AN is input on the answer screen G5, one of the four options is completely filled and displayed as the answer AN.

The eraser OE included in the answer field AF is a display object provided for each question. When a user operation on the eraser OE is detected (step S307: YES), the control unit 11 performs processing of erasing the corresponding answer AN in response to the user operation (step S308). That is, the eraser OE is used to cancel an answer on a question basis.

The clear button (button B5) is a second display object for erasing answers, and only one is provided for the answer field AF. When a user operation on the clear button (button B5) is detected, the control unit 11 performs processing of erasing all answers AN to each of a plurality of questions, in response to the user operation. That is, the clear button (button B5) is used to collectively erase a plurality of answers AN included in the answer field AF.

The link OL1 included in the answer field AF is a display object provided for each question. When a user operation on the link OL1 is detected (step S309: YES), the control unit 11 causes a question page (answer screen G5) linked to link OL1 to be displayed on the display unit 27, in response to the user operation (step S310). In other words, the control unit 11 causes a question page, which includes a question corresponding to the link OL1 and in which the answer AN to the question can be reset, to be displayed.

After changing the answer AN in the answer screen G5, when the user selects the mark sheet button (button B2), the control unit 11 switches the screen of the display unit 27 of the user terminal 20 to the mark sheet screen G6 again.

In this way, in the stage where scoring is not performed, processing of resetting or erasing the answer AN is performed in response to a user operation on the display object provided for each question. In addition, in response to the user's operation on the second display object provided for the answer field AF, the processing of collectively erasing all answers AN is performed. That is, the user can freely edit the answers in the pre-scoring stage.

On the other hand, after scoring, the control unit 11 changes the properties of the display objects included in the answer field AF to restrict editing of individual answers included in the answer group (steps S303 to S306). At this time, the property of the second display object is maintained. Therefore, when an operation on the scoring button (button B6) is detected, the information processing server 10 restricts the user from redoing each answer, making it impossible for arbitrary editing of each answer results after scoring. Thus, through the interactive process between the user and the information processing server 10, it can support the user in performing a technical task (proper answer processing in the mock test) in a trustworthy manner.

Specifically, when a user operation on a scoring button (button B6), that is, a user operation instructing scoring is detected (step S302: YES), the control unit 11 performs scoring processing (step S303). In the scoring processing, the control unit 11 compares the answer to each question with the correct answer information prepared in advance, makes a true-false determination, and generates a true-false determination result. Furthermore, the control unit 11 generates a scoring result (test result) from the generated true-false determination result. Furthermore, the control unit 11 stores test result information including the answers, the true-false determination result, and the scoring result in the user management data storage area 12c of the storage unit 12.

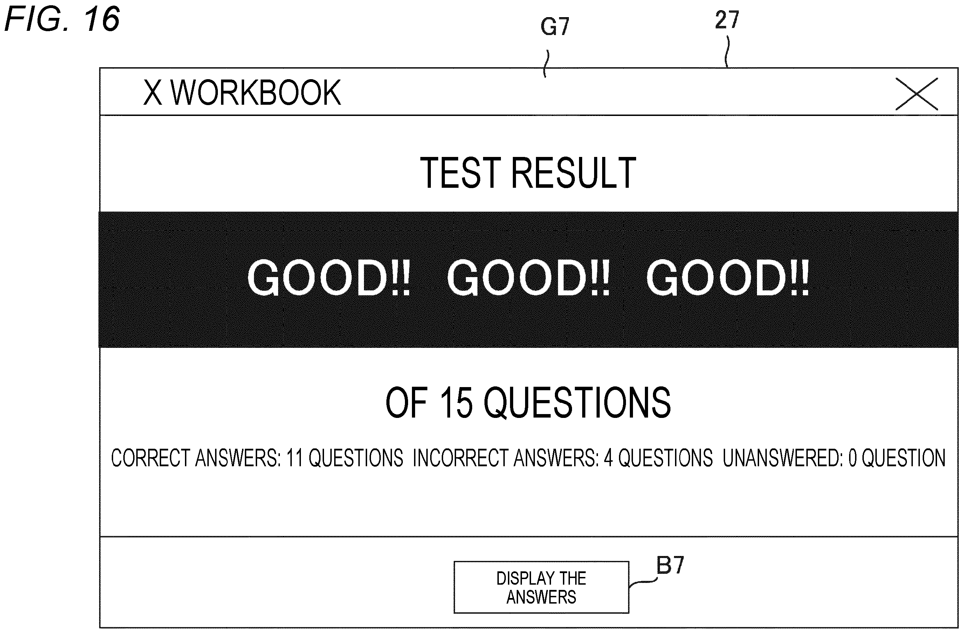

When the scoring processing ends, the control unit 11 switches the screen of the display unit 27 of the user terminal 20 from the mark sheet screen G6 shown in FIG. 15 to a test result screen G7 shown in FIG. 16, and causes the test result screen G7 to be displayed (step S304).

On the test result screen G7, a comprehensive evaluation is displayed, in addition to the number of correct answers, the number of incorrect answers, and the number of unanswered answers for the total number of questions included in the mock test. FIG. 16 shows an example where 11 questions of 15 questions are answered correctly, 4 questions are answered incorrectly, and 0 question is not answered, and the comprehensive evaluation is GOOD.

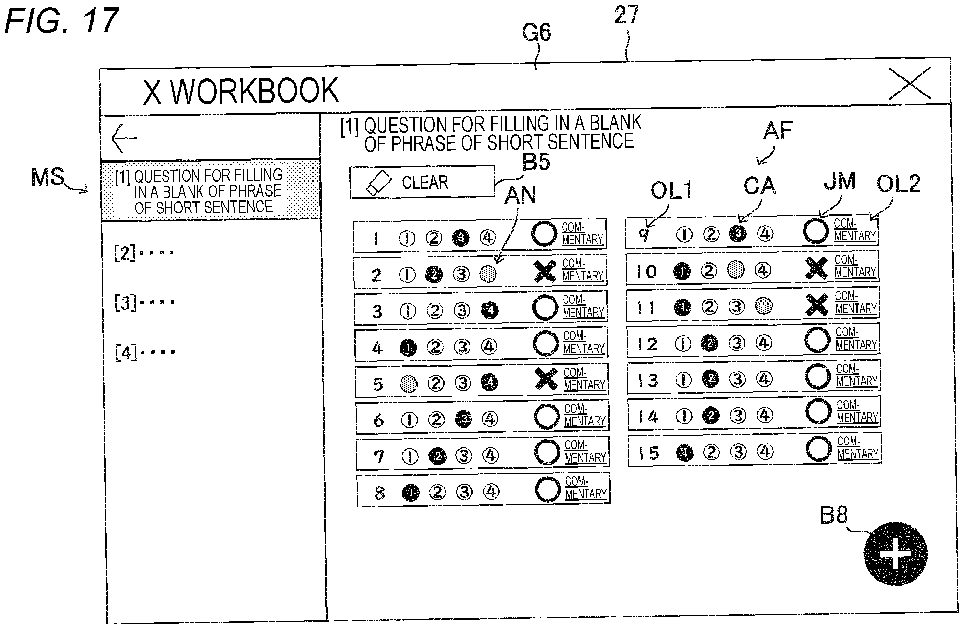

When a user's operation on a button B7 at the bottom of the test result screen G7 is detected, the control unit 11 switches the screen of the display unit 27 of the user terminal 20 from the test result screen G7 to the mark sheet screen G6 after scoring shown in FIG. 17. At this time, the control unit 11 changes the properties of the display objects (step S305) and then displays the mark sheet screen G6 after scoring (step S306).

The property change performed in step S305 is performed in order to restrict editing of individual answers. Specifically, as shown in FIG. 17, in order to hide the eraser OE from the answer field AF of the mark sheet screen G6, the property indicating 'display/hide' of the eraser OE is set to 'hide'. In addition, as shown in FIG. 17, in order to disable the link OL1 in the answer field AF of the mark sheet screen G6, the property indicating 'enable/disable' of the link OL1 is set to 'disable'.

The mark sheet screen G6 after scoring displayed in step S306 is similar to the mark sheet screen G6 before scoring in that the menu MS is displayed in the left area. As shown in FIG. 17, the mark sheet screen G6 after scoring is different from the mark sheet screen G6 before scoring in that a sticky note creation button (button B8) is provided in place of the scoring button (button B6) in the answer field AF in the right area and the configuration of the area corresponding to each question is different.

The area corresponding to each question includes the link OL1, a determination result JM, and a link OL2 linked to a commentary screen of the corresponding question, in addition to the four options. The link OL1 is substantially equivalent to a label object because, as will be described below, the link function is disabled, unlike the link before scoring.

The determination result JM is a true-false determination result of each answer, and in this example, is expressed as "∘" or "×". That is, when a user operation instructing scoring is detected, the control unit 11 performs processing of causing a true-false determination result for each answer to be displayed in the answer field AF, in step S306. This makes it possible for the user to easily recognize the true-false of each answer.

In addition, one of the four options is displayed as a correct answer CA so that it can be distinguished from the other options (in this example, outlined characters are used). Furthermore, when the correct answer CA and the user's answer AN are different, one of the four options is completely filled and displayed as the answer AN.

In this way, after scoring, the eraser OE is set to 'hide' on the mark sheet screen G6, and the means for erasing individual answers AN is not provided to the user any more. In addition, the link OL1 becomes disabled, and the means for resetting the answer by switching to the answer screen G5 is not provided to the user any more. Therefore, it is possible to prevent individual answers AN from being corrected by the user after scoring.

After the above-described mark sheet screen processing ends, when a user operation on the sticky note creation button (button B8) on the mark sheet screen G6 after scoring is detected (step S204: YES), the control unit 11 performs electronic sticky note creation processing (step S205).

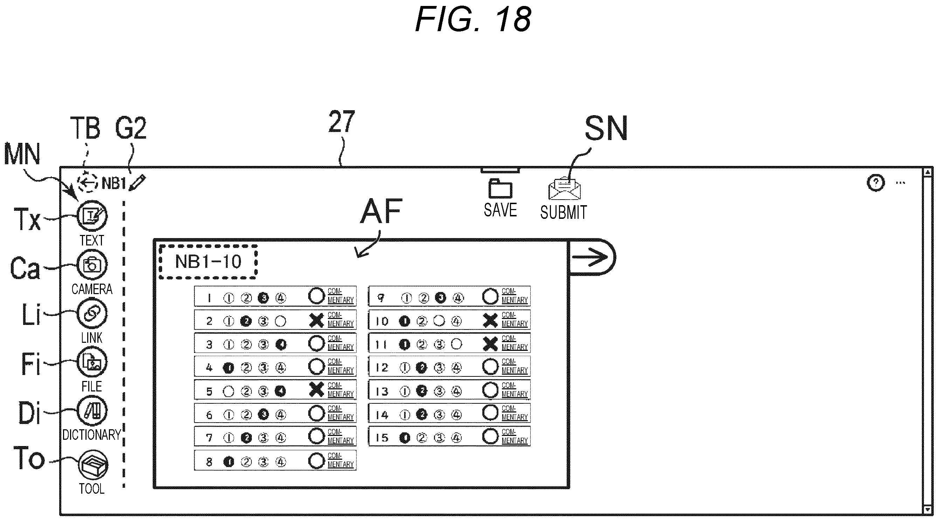

In the electronic sticky note creation processing, as shown in FIG. 18, the control unit 11 creates an electronic sticky note NB1-10 having, as a content, the answer field AF displayed on the mark sheet screen G6 after scoring, and causes the created electronic sticky note NB 1-10 to be displayed in the notebook NB 1.

The user may perform a submission operation on the created electronic sticky note NB1-10. For example, when a submission operation of dragging the electronic sticky note NB1-10 to a submission icon SN and then releasing the dragging is detected, the control unit 11 may transfer the electronic sticky note NB1-10 to the teacher's user terminal 20. Thereby, the test result of the mock test that is required to be submitted as an assignment can be easily submitted to the teacher.

The illustrative embodiment described above shows a specific example in order to easily understand the disclosure, and the present invention is not limited to the illustrative embodiment described above and should be understood to include a variety of modifications and alternations of the illustrative embodiment described above. For example, it would be understood that the illustrative embodiment described above can be embodied by modifying the constitutional elements without departing from the gist and scope thereof. In addition, it would be understood that various illustrative embodiments can be implemented by appropriately combining the plurality of constitutional elements disclosed in the illustrative embodiment described above. Further, one skilled in the art would understand that various illustrative embodiments can be implemented by omitting some constitutional elements from all the constitutional elements shown in the illustrative embodiment or adding some constitutional elements to the constitutional elements shown in the illustrative embodiment. That is, various modifications and changes are possible without departing from the scope of the patent claims.

In the above-described illustrative embodiment, the example in which correction of individual answers after scoring is prohibited by setting the property indicating 'display/hide' of the eraser OE to 'hide' has been shown. However, correction of individual answers after scoring may also be prohibited by setting a property indicating 'enable/disable' of the eraser OE to 'disable'. In addition, the example in which correction of individual answers after scoring is prohibited by setting the property indicating 'enable/disable' of the link OL1 to 'disable' has been show. However, correction of individual answers after scoring may also be prohibited by setting a property indicating 'display/hide' of the link OL1 to 'hide' to prohibit the switching to the answer screen.

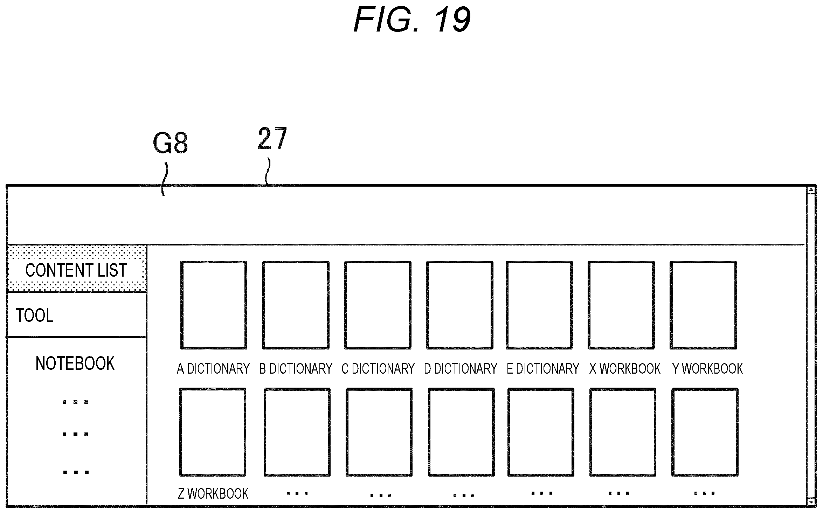

In the above-described illustrative embodiment, the example in which the mock test processing is executed by selecting the mock test content from the notebook has been shown. However, the mock test processing does not necessarily need to be started by an operation within the notebook. For example, the mock test processing may be started, in response to selection of the mock test content on a top screen G8 as shown in FIG. 19, which is displayed before opening the notebook application.

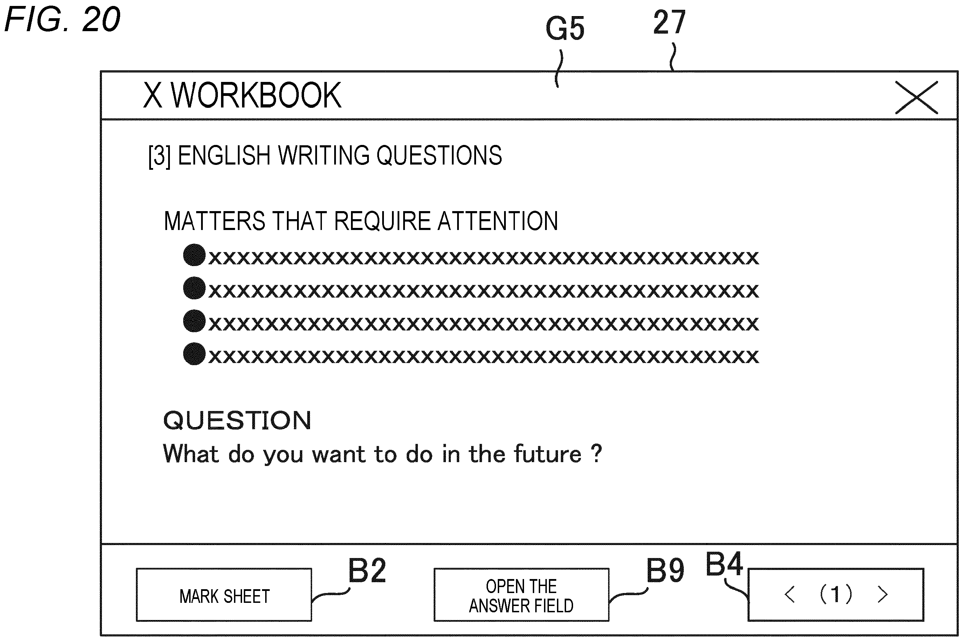

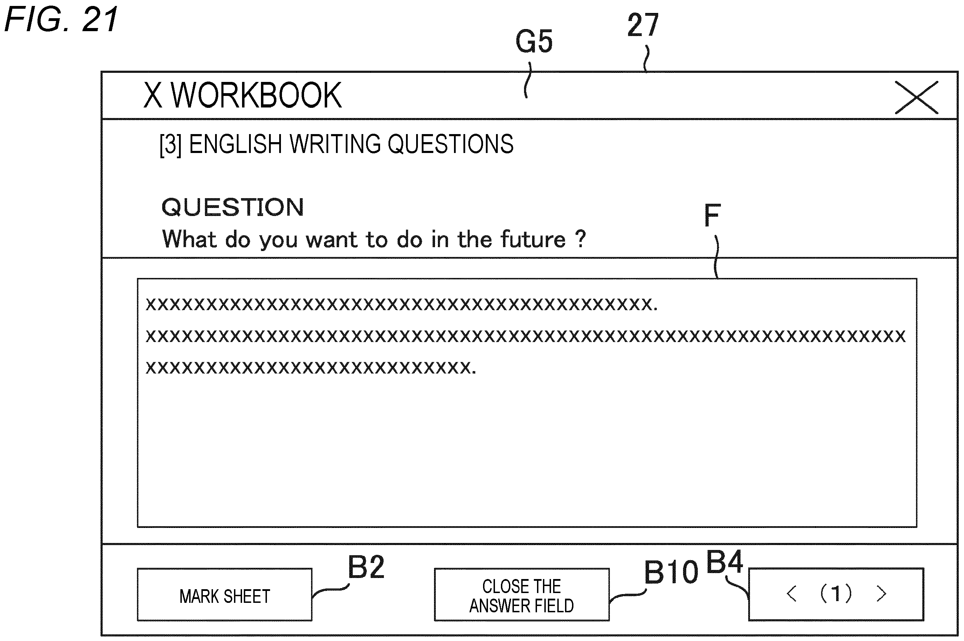

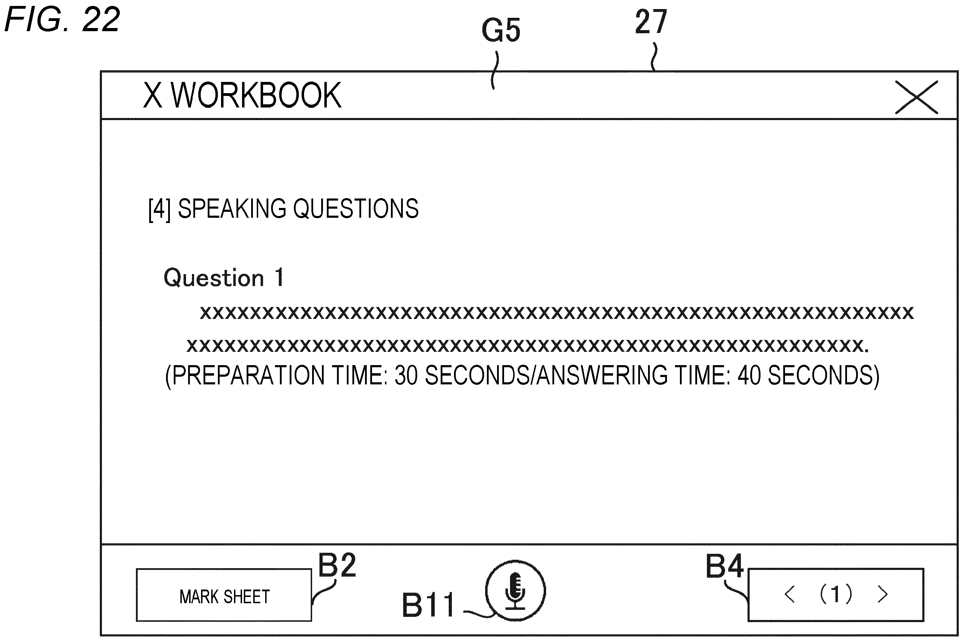

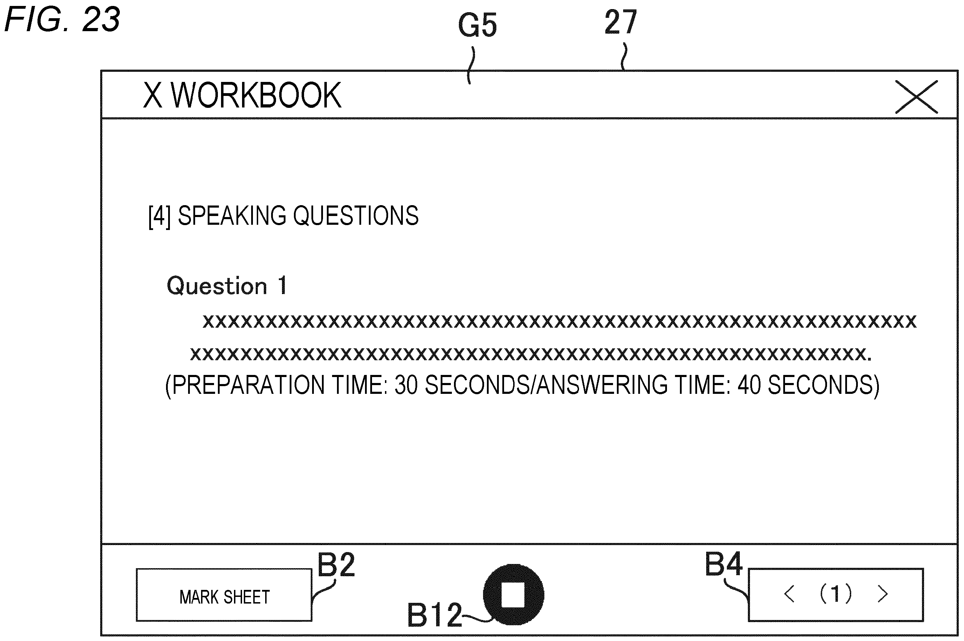

In the above-described illustrative embodiment, the multiple-choice questions that can be automatically scored have been exemplified as questions in the mock test content. However, questions in the mock test content are not limited to the multiple-choice questions. The mock test content may include an essay question shown in FIGS. 20 and 21, a speaking question shown in FIGS. 22 and 23, and the like.

FIGS. 20 and 21 show the answer screen G5 for an essay question. When a user's operation on a button B9 displayed below a question sentence in FIG. 20 is detected, the control unit 11 causes the answer field F in an essay format to be displayed in the answer screen G5, as shown in FIG. 21, and when a user's operation on a button B 10 displayed below the answer field F in an essay format in FIG. 21 is detected, the control unit 11 causes the answer field F in an essay format to be hidden from the answer screen G5, as shown in FIG. 20.

FIGS. 22 and 23 show the answer screen G5 for a speaking question. When a user's operation on a recording button (button B11) displayed below a question sentence in FIG. 22 is detected, the control unit 11 starts recording and causes a stop button (button B 12) to be displayed as shown in FIG. 23. When a user's operation on the stop button (button B 12) displayed below the question sentence in FIG. 23 is detected, the control unit 11 stops recording.

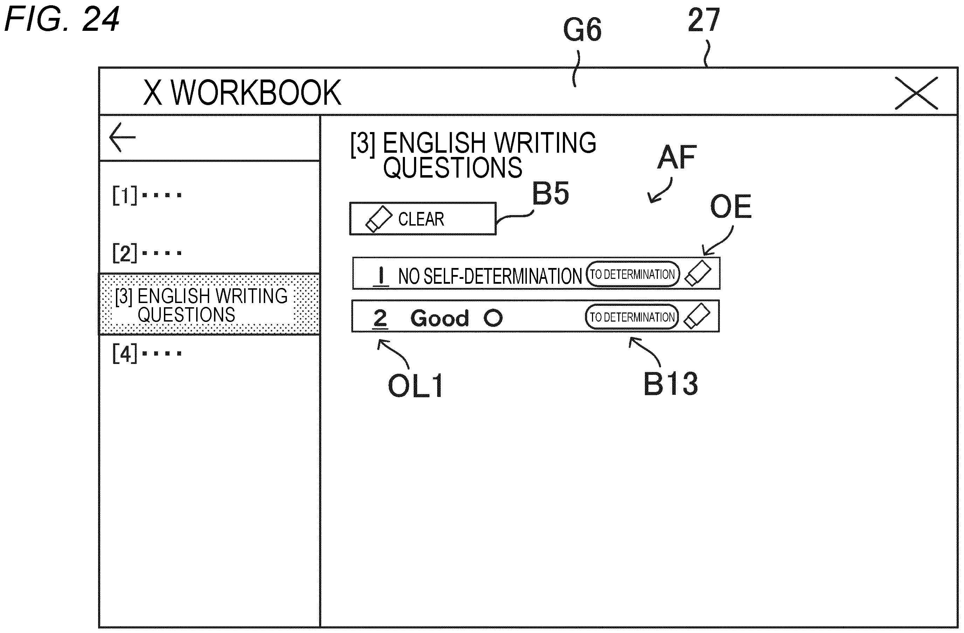

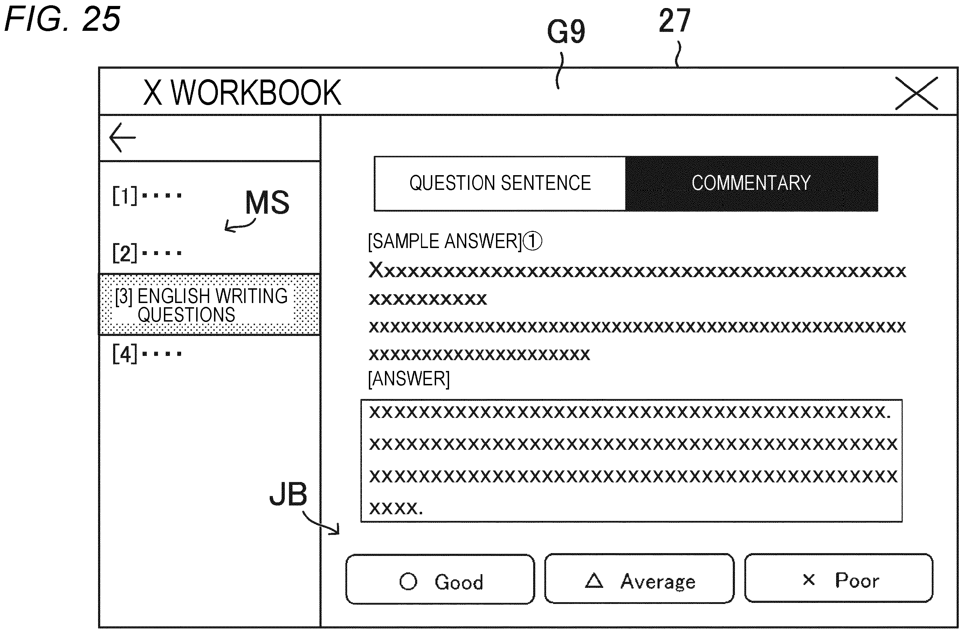

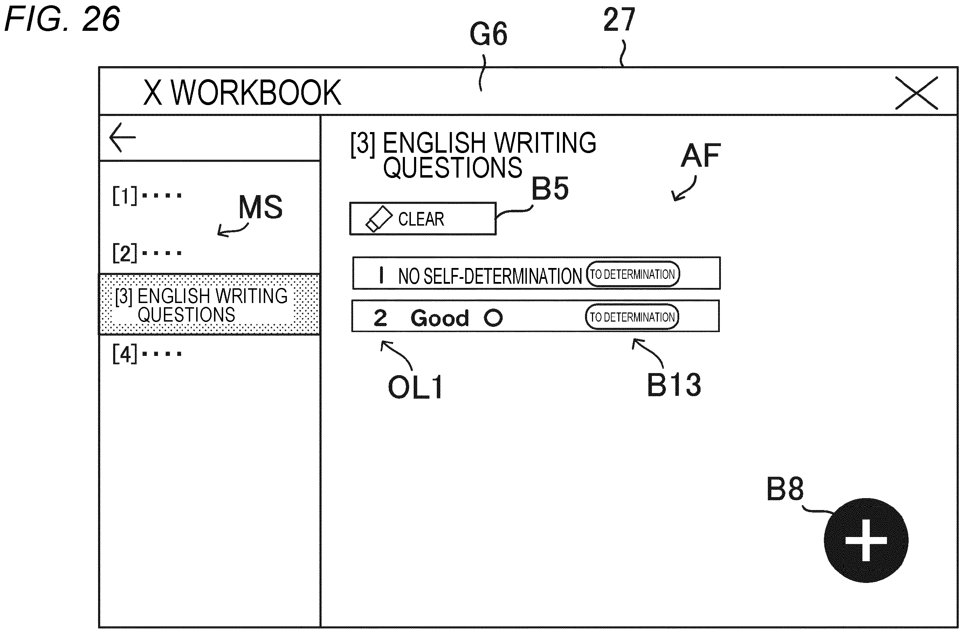

FIG. 24 shows the mark sheet screen G6 in which the answer field AF for a section "[3] English writing question" related to the essay question before scoring processing is displayed. FIG. 25 is a self-determination screen G9 for the essay question. FIG. 26 shows the mark sheet screen G6 in which the answer field AF for a section "[3] English writing question" related to the essay question after scoring processing is displayed.

In the information processing server 10, the automatic scoring is not performed on the essay question or speaking question shown in FIGS. 20 to 23, unlike the multiple-choice questions. For this reason, in the state where the sections related to these questions are selected, the determination result JM is not displayed on any of the mark sheet screens G6 before and after scoring, as shown in FIGS. 24 and 26. Instead, a button B 13 for screen switching to the self-determination screen G9 as shown in FIG. 25 is displayed, and the user can input a self-determination result on the self-determination screen G9.

In the self-determination screen G9 shown in FIG. 25, the user compares the user's answer with an example answer and inputs a self-determination result (in this example, any one of "∘ Good", "△ Average", and "× Poor") by operating the self-determination button JB. For the question for which the self-determination result is input, as shown in FIGS. 24 and 26, the self-determination result is also displayed in the answer field AF of the mark sheet screen G6.

Note that in the mark sheet screen G6 shown in FIG. 24 where the answer field AF before scoring processing is displayed, the eraser OE is displayed for each question, unlike the mark sheet screen G6 shown in FIG. 26 where the answer field AF after scoring processing is displayed. In contrast, the mark sheet screen G6 shown in FIG. 26 where the answer field AF after scoring processing is displayed is different from the mark sheet screen G6 shown in FIG. 24 where the answer field AF before scoring processing is displayed, in that the eraser OE for each question is not displayed and the sticky note creation button (button B8) is displayed.

When the sticky note creation button (button B8) is selected, the control unit 11 creates an electronic sticky note NB1-11 having, as a content, the answer field AF displayed on the mark sheet screen G6 after scoring, and causes the created electronic sticky note NB1-10 to be displayed in the notebook NB1.

The hardware configurations of the information processing server 10 and the user terminal 20 are not particularly limited. In the above-described illustrative embodiment, the information processing server 10 is shown as a single apparatus in FIG. 1, as an example, but may also be configured by a plurality of apparatuses. The information processing server 10 and the user terminal 20 may be computers, each provided with a processor and a memory. The above-described functional configurations of the information processing server 10 and the user terminal 20 may be implemented by the processors executing the programs on the memories.

The processor is not particularly limited, but may be, for example, a central processing unit (CPU), a graphics processing unit (GPU) or the like. In addition, the processor may include a hardware circuit such as a field-programmable gate array (FPGA) and an application specific integrated circuit (ASIC). The memory is not particularly limited, but may be a semiconductor memory such as a random access memory (RAM), a read only memory (ROM) and a solid state drive (SSD), a magnetic storage device such as a hard disk drive (HDD), an optical memory device, or a non-transitory computer-readable medium readable by a computer.

## Claims

1. An information processing apparatus comprising:
a control unit configured to:
display an answer field including an answer group on a display unit, the answer group including at least:
answers input by a user to each of a plurality of questions; and
a display object to which a property of correction is set in association with each of the answers; and
in response to detecting an operation instructing scoring of individual answers in the answer group from an operation unit, restrict editing of the individual answers included in the answer group by changing the property of the display object.

2. The information processing apparatus according to claim 1,
wherein the property indicates one of display or hide of the display object or enable or disable of the display object, and
wherein the control unit is further configured to:
in response to a user operation on the display object, erase a corresponding answer.

3. The information processing apparatus according to claim 1,
wherein the display object is an object provided for each question,
wherein the property indicates one of display or hide of the display object or enable or disable of the display object, and
wherein the control unit is further configured to:
in response to a user operation on the display object, display a question page on the display unit, the question page including a corresponding question and being configured to be able to reset an answer to the question.

4. The information processing apparatus according to claim 1, wherein the control unit is further configured to:
in response to detecting an operation instructing scoring, display a true-false determination result for each answer in the answer field on the display unit.

5. The information processing apparatus according to claim 1,
wherein the answer field further includes a second display object whose property is maintained before and after scoring, and
wherein the control unit is further configured to:
in response to a user operation on the second display object, erasing all answers to each of the plurality of questions.

6. An information processing method to be executed by an information processing device, the information processing method comprising:
causing an answer field including an answer group to be displayed, the answer group including at least:
answers input by a user to each of a plurality of questions; and
a display object to which a property of correction is set in association with each of the answers; and
in response to detecting an operation instructing scoring of individual answers in the answer group, restricting editing of the individual answers included in the answer group by changing the property of the display object.

7. The information processing method according to claim 6,
wherein the property indicates one of display or hide of the display object or enable or disable of the display object, and
wherein the information processing method further comprises:
in response to a user operation on the display object, erasing a corresponding answer.

8. The information processing method according to claim 6,
wherein the display object is an object provided for each question,
wherein the property indicates one of display or hide of the display object or enable or disable of the display object, and
wherein the information processing method further comprises:
in response to a user operation on the display object, causing a question page to be displayed, the question page including a corresponding question and being configured to be able to reset an answer to the question.

9. The information processing method according to claim 6, further comprising:
in response to detecting an operation instructing scoring, causing a true-false determination result for each answer in the answer field to be displayed.

10. The information processing method according to claim 6,
wherein the answer field further includes a second display object whose property is maintained before and after scoring, and
wherein the information processing method further comprises:
in response to a user operation on the second display object, erasing all answers to each of the plurality of questions.

11. A computer program for causing a computer to perform:
displaying an answer field including an answer group on a display unit, the answer group including at least:
answers input by a user to each of a plurality of questions; and
a display object to which a property of correction is set in association with each of the answers; and
in response to detecting an operation instructing scoring of individual answers in the answer group from an operation unit, restricting editing of the individual answers included in the answer group by changing the property of the display object.

12. The computer program according to claim 11,
wherein the property indicates one of display or hide of the display object or enable or disable of the display object, and
wherein the computer program further causes the computer to perform:
in response to a user operation on the display object, erasing a corresponding answer.

13. The computer program according to claim 11,
wherein the display object is an object provided for each question,
wherein the property indicates display or hide of the display object or enable or disable of the display object, and
wherein the computer program further causes the computer to perform:
in response to a user operation on the display object, displaying a question page on the display unit, the question page including a corresponding question and being configured to be able to reset an answer to the question.

14. The computer program according to claim 11, wherein the computer program further causes the computer to perform:
in response to detecting an operation instructing scoring, displaying a true-false determination result for each answer in the answer field on the display unit.

15. The computer program according to claim 11,
wherein the answer field further includes a second display object whose property is maintained before and after scoring, and
wherein the computer program further causes the computer to perform:
in response to a user operation on the second display object, erasing all answers to each of the plurality of questions.
